# EUROPÄISCHE PATENTSCHRIFT

(11) **EP 0 900 676 B1**
(45) Veröffentlichungstag und Bekanntmachung des Hinweises auf die Patenterteilung: **06.06.2007**
(21) Anmeldenummer: 98113769.8
(22) Anmeldetag: 23.07.1998
(51) Int. Cl.: B60G 17/015

(54) **Fahrwerkregelung**
Chassis control
Régulation du chassis

(30) Priorität: 04.09.1997 DE 19738608
(43) Veröffentlichungstag der Anmeldung: 10.03.1999
(73) Patentinhaber: ROBERT BOSCH GMBH, 70442 Stuttgart (DE)
(72) Erfinder: Pöchmüller, Werner, Dipl.-Ing., 31139 Hildesheim (DE)

(56) Entgegenhaltungen:
- DE-A- 19 547 314
- DE-A- 19 621 085
- US-A- 4 908 704
- US-A- 5 521 633
- US-A- 5 587 938
- PATENT ABSTRACTS OF JAPAN vol. 015, no. 457 (M-1181), 20. November 1991 (1991-11-20) & JP 03 193519 A (MAZDA MOTOR CORP), 23. August 1991 (1991-08-23)
- PATENT ABSTRACTS OF JAPAN vol. 016, no. 232 (M-1256), 28. Mai 1992 (1992-05-28) & JP 04 046814 A (NISSAN MOTOR CO LTD), 17. Februar 1992 (1992-02-17)
- PATENT ABSTRACTS OF JAPAN vol. 011, no. 094 (M-574), 25. März 1987 (1987-03-25) & JP 61 244614 A (HITACHI LTD), 30. Oktober 1986 (1986-10-30)
- PATENT ABSTRACTS OF JAPAN vol. 016, no. 100 (P-1323), 11. März 1992 (1992-03-11) & JP 03 276313 A (MAZDA MOTOR CORP), 6. Dezember 1991 (1991-12-06)

## Beschreibung

Die Erfindung betrifft eine Vorrichtung und ein Verfahren zur Regelung eines Fahrwerks eines Fahrzeuges mit Mitteln zur Einstellung von Fahrwerk-Kenngrößen, wie z.B. Federweg oder Federkonstante, entsprechend berechneter Steuersignale. Die Erfindung ist geeignet für den Einsatz in Kraftfahrzeugen, insbesondere für den Einsatz in Personenkraftwagen.

Seit einigen Jahren werden in zunehmendem Maße in Personenkraftwagen Fahrwerkregelungen eingesetzt, um den Komfort und die Sicherheit dieser Fahrzeuge zu erhöhen. Eine solche Fahrwerkregelung ermöglicht bspw. eine Niveauregulierung des Fahrzeugaufbaus unabhängig von der Fahrzeug-Zuladung oder eine einstellbare Dämpfungscharakteristik, um das Fahrwerk an unterschiedliche Fahrweg-Gegebenheiten anzupassen.

Hinsichtlich der Regelcharakteristik von Fahrwerkregelungen unterscheidet man zwischen passiven, adaptiven, semiaktiven und aktiven Fahrwerkregelungen. Eine Übersicht über die verschiedenen Regelcharakteristiken ist in R. Kallenbach u.a.: "Optimierung des Fahrzeugverhaltens mit semiaktiven Fahrwerkregelungen", VDI-Berichte Nr. 699, 1988, S. 121-135 gegeben. Der technische Aufwand und die damit verbundenen Kosten für die Fahrwerkregelung sind abhängig von der gewünschten Regelcharakteristik und steigen in der Regel von der passiven zur aktiven Fahrwerkregelung kontinuierlich an. In der genannten Druckschrift wird insbesondere eine Optimierung des Fahrzeugverhaltens mit semiaktiven Fahrwerkregelungen beschrieben, welche gegenüber aktiven Fahrwerkregelungen einen deutlichen Kostenvorteil aufweisen.

Ein modernes Konzept zur Fahrwerkregelung ist in W. Schramm u.a.: "Ein Hochleistungskonzept zur aktiven Fahrwerkregelung mit reduziertem Energiebedarf", ATZ Automobiltechnische Zeitschrift 94 (1992), S. 392-403, beschrieben. Vorgestellt wird insbesondere ein neues Konzept zur teilaktiven Fahrwerkregelung bestehend aus einer volltragenden hydropneumatischen Federung mit Aktuatoren in Trennzylinder-Anordnung.

Die zur Fahrwerkregelung zugehörige Sensorik besteht gegenwärtig aus Wegesensoren, die den Federweg des Fahrwerks an jeder Achse, vorzugsweise an jedem Rad bestimmen. Eine optimale Messwerterfassung würde aus heutiger Sicht die Messung des Federwegs an jeder Radaufhängung erfordern. Trotz dieses hohen technischen Aufwands und den damit verbundenen hohen Kosten, insbesondere durch die Verwendung einer großen Anzahl von Sensoren und einer hohen zur Verfügung gestellten Rechengeschwindigkeit sowie durch die Bereitstellung leistungsstarker hydraulischer, pneumatischer und/oder elektrischer Stell-Elemente für die Erzielung einer hohen Regelgeschwindigkeit, können mit den Fahrwerkregelungen nach dem Stand der Technik nicht alle Situationen, die in einem Fahrbetrieb auftreten können, optimal und ausreichend schnell erfasst werden.

Aus der digitalen Bildverarbeitung sind Verfahren und Algorithmen bekannt, mit deren Hilfe zumindest teilweise vorgebene Strukturen und Muster in komplexen Bildern identifiziert und aus diesen herausgefiltert werden. Derartige Verfahren ermöglichen bspw. in der Medizintechnik die automatische Erkennung von Krebszellen in Gewebeproben.

Aus der automotiven Messtechnik sind Verfahren zur Abstandsmessung bekannt, bspw. unter Einsatz von elektromagnetischen Wellen in verschiedenen Frequenzbereichen. Weiterhin ermöglichen moderne Navigationssysteme im Kraftfahrzeug die Bereitstellung von Positions- und/oder Verkehrsflussinformationen

In der JP-A-03 193519 wird die Nutzung eines Ultraschall-Sensors zur Detektion des Abstands eines Fahrzeugs zu einem vorausfahrenden Fahrzeug beschrieben. Bei Herannäherung an ein vorausfahrendes Fahrzeug wird eine Anhebung des eigenen Fahrzeugs durchgeführt, um den Überblick zu verbessern und die Sicherheit im Falle eines Auffahrunfalls zu erhöhen.

Die JP 04046814 beschreibt den Einsatz eines Infrarot-Radars zur Detektion von Fußgängern und dessen Einsatz im Kraftfahrzeug. Dabei wird bei Detektion eines Fußgängers im Fahrweg und wahrscheinlicher Kollision die Kfz-Front abgesenkt, um den Fußgänger zu schützen

Die DE 19621085 A zeigt ein Beeinflussung der Fahrzeuglängsdynamik in Abhängigkeit einer durch Bilderkennung ermittelten gefahr.

Der Erfindung liegt das Problem zugrunde, eine Vorrichtung und ein Verfahren zur. Regelung eines Fahrwerks eines Fahrzeugs bereitzustellen, welche ein hohes Maß an Fahrsicherheit und Fahrkomfort gewährleisten. Insbesondere soll die Fahrwerkregelung auf alle aktuellen und unmittelbar bevorstehenden Fahrsituationen schnell und optimal reagieren. Weiterhin soll der technische Aufwands und die damit verbundenen Herstellungs-, Montage- und Betriebskosten möglichst gering sein.

Das Problem wird durch die in den-unabhängigen Patentansprüchen offenbarten Verfahren, Vorrichtungen und Verwendungen gelöst. Besondere Ausführungsarten der Erfindung sind in den Unteransprüchen offenbart.

Das Problem ist bei einer Vorrichtung zur Regelung eines Fahrwerks eines Fahrzeugs mit Mitteln zur Einstellung von Fahrwerk-Kenngrößen, wie z.B. Federweg oder Federkonstante, entsprechend berechneter Steuersignale, dadurch gelöst, dass die Vorrichtung enthält: Signalaufnahme-Mittel zur Aufnahme von Signalen der Umgebung des Fahrzeugs und zur Wandlung der Signale in elektrische Umgebungs-Signale,

Signalverarbeitungs-Mittel zur Ermittlung von fahrwerkrelevanten Informationen aus den Umgebungs-Signalen, und Rechen-Mittel zur Berechnung der Steuersignale für die Fahrwerkregelung unter Verwendung der fahrwerkrelevanten Informationen. Bei den Signalen der Umgebung des Fahrzeugs bandelt es sich um optische Signale in Form von Bildern der Umgebung. Entsprechend weisen die Signalaufnahme-Mittel Bildaufnahme-Miltel zus Aufrahme von Bildern des Umgebung des Fahrzeugs, z.B. eine Kamera zur Aufnahme von Bildern, auf.

Die erfindungsgemäße Vorrichtung bietet den Vorteil, dass durch die Aufnahme von Signalen der Umgebung des Fahrzeugs fahrwegrelevante Informationen ermittelt und für die Berechnung der Steuersignale für die Fahrwerkregelung berücksichtigt werden können, so dass die Fahrwerkregelung sich bei der Berechnung und Einstellung der Fahrwerk-Kenngrößen sich nicht mehr allein auf die am Fahrzeug direkt ermittelten Messgrößen wie Federweg oder Einfedergeschwindigkeit abstützen muss, sondern sich darüberhinaus, sozusagen voraussehend, auf unmittelbar bevorstehende Fahrsituationen einstellen kann. Dies erhöht zum einen die Fahrsicherheit, zum anderen erhöht sich dadurch jedoch auch die zur Verfügung stehende Reaktionszeit für die Fahrwerkregelung, wodurch sowohl die Anforderungen an die Rechengeschwindigkeit als auch die Anforderungen an die Stell-Geschwindigkeit reduziert werden. Die geringeren Anforderungen an die Rechengeschwindigkeit können vorteilhaft zugunsten einer höheren Rechengenauigkeit und damit zugunsten einer höheren Fahrsicherheit eingesetzt werden. Die geringen Anforderungen an die Stell-Geschwindigkeit, bspw. die Anforderungen an die hydraulischen, pneumatischen oder elektrischen Stell-Elemente zur Bereitstellung eines entsprechenden Federdrucks, erlauben den Einsatz von StellElementen mit geringerer Baugröße, geringerem Gewicht und geringerer Leistungsaufnahme. Die erfindungsgemäße Vorrichtung ermöglicht darüberhinaus einen hohen Zuwachs an Fahrsicherheit, da die Signalaufnahmemittel eine unmittelbar bevorstehende Kurvenfahrt oder Abbremsung erkennen können, noch bevor der Führer des Fahrzeugs auf das bevorstehende Ereignis reagiert. Weiterhin ist vorteilhaft, dass hinsichtlich der Signalaufnahme-Mittel auf bereits im Fahrzeug befindliche Einrichtungen zurückgegriffen werden kann.

Eine besondere Ausführungsart der Erfindung ist gekennzeichnet durch Mittel zur Erfassung transienter fahrzeugspezifischer Daten, wie z.B. momentane Geschwindigkeit oder Masseverteilung, wobei die Rechen-Mittel die transienten fahrzeugspezifischen Daten bei der Berechnung der Steuersignale berücksichtigt. Diese Ausführungsart hat den Vorteil, dass durch die Erfassung und Berücksichtigung transienter fahrzeugspezifischer Daten die Fahrwerkregelung optimiert werden kann und damit die Fahrsicherheit erhöht werden kann. Transiente fahrzeugspezifische Daten sind z.B. die momentane Geschwindigkeit, die Drehzahl, die Schaltstufe, der Lenkradeinschlag, die Masse oder die Masseverteilung. Es ist vorteilhaft, dass eine Reihe dieser transienten fahrzeugspezifischen Daten, wie bspw. die Geschwindigkeit, ohnehin bereits im Fahrzeug laufend erfasst wird. Der Aufwand für eine Ermittlung dieser Daten und deren Berücksichtigung für die Fahrwerkregelung ist daher in vorteilhafter Weise gering.

Erfindungsgemäß handelt es sich bei den Signalaufnahme-Mitteln um Bildaufnahme-Mittel zur Aufnahme von Bilder der Umgebung des Fahrzeugs, und die Signalverarbeitungs-Mittel ermitteln die fahrwegrelevanten Informationen unter Verwendung von Verfahren und Algorithmen der digitalen Bildverarbeitung. Die hat den Vorteil, dass die Bildaufnahmemittel insbesondere für unmittelbar bevorstehende Vorgänge in der Fahrwerkregelung sehr relevante Fahrweginformationen liefern. Bspw. können die Bildaufnahme-Mittel zusammen mit den Verfahren zur digitalen Bildverarbeitung den unmittelbar bevorstehenden lateralen Fahrspurverlauf vor dem Fahrzeug detektieren. Zusammen mit transienten fahrzeugspezifischen Daten, wie z.B. der momentanen Geschwindigkeit und dem momentanen Lenkradeinschlag, kann die Fahrwerkregelung vorteilhaft sehr frühzeitig bevorstehende Veränderungen der Fahrsituation ermitteln. Außerdem ist vorteilhaft, dass die Bildaufnahme-Mittel nicht nur statische Gegebenheiten, sondern auch dynamische Vorgänge im Fahrzeug-Vorfeld ermitteln kann, wie bspw. ein vorausfahrendes und abbremsendes Fahrzeug, oder ein sich von der Seite auf die Fahrbahn zu bewegendes Objekt wie bspw. ein sich auf die Fahrbahn zu bewegendes Kind. Die erfindungsgemäße Vorrichtung bietet daher den Vorteil, dass die Fahrwerkregelung sich auf den unmittelbar bevorstehenden Abbremsvorgang des Fahrzeugs vorbereiten kann, und bspw. ein "Abtauchen" des Fahrzeugs durch entsprechendes Verändern der Fahrwerk-Kenngrößen, bspw. der Federkonstante in der Vorderachse, entgegenwirken kann.

Gemäß einer weiteren besonderen Ausführungsart der Erfindung sind die Bildaufnahme-Mittel in einer hohen Position im Inneren des Fahrzeugs positioniert, vorzugsweise zwischen Rückspiegel und Windschutzscheibe, wobei die Bildaufnahme-Mittel eine Kamera aufweisen, vorzugsweise ein CMOS-Bildsensor (Complementary Metal Oxide Semiconductor) oder eine CCD-Kamera (Charged Coupled Devices). Diese hohe Position der Bildaufnahme-Mittel hat den Vorteil, dass die Bildaufnahme-Mittel einen guten Überblick über das Fahrzeug-Vorfeld haben, und damit einen guten Überblick über den Fahrbahnverlauf und die Fahrbahnverhältnisse. Weiterhin ist von Vorteil, dass bei einer Positionierung der Bildaufnahme-Mittel zwischen Rückspiegel und Windschutzscheibe im Fahrzeuginnern das Blickfeld der Bildaufnahme-Mittel noch in einem Bereich liegt, der von den Wischerblättern der Windschutzscheibe überstrichen wird. Dadurch ist auch bei Regenverhältnissen eine zuverlässige Funktionsweise der Bildaufnahme-Mittel garantiert. Weiterhin ist von Vorteil, dass die Verwendung eines CMOS-Bildsensors oder einer CCD-Kamera eine kleine Bauform und geringes Gewicht für die Bildaufnahme-Mittel ermöglicht, so dass die Bildaufnahme-Mittel problemlos im Fahrzeuginnern untergebracht werden können.

In einer weiteren besonderen Ausführungsart der Erfindung ermitteln die Bildverarbeitungs-Mittel den Nickwinkel des Fahrzeugs. Dies ist vorteilhaft, weil dadurch eine automatische Niveauregulierung des Fahrzeugs in Fahrzeuglängsrichtung möglich ist. Entsprechend kann auch der Wankwinkel oder der Gierwinkel des Fahrzeugs im Bezug auf die Fahrbahn und den Radius einer befahrenen Kurve ermittelt werden.

Die Erfindung umfasst weiterhin ein Arbeitsverfahren zur Regelung eines Fahrwerks eines Fahrzeugs entsprechend der vorstehend beschriebenen Vorrichtung sowie die Verwendung von Bildern der Umgebung eines Fahrzeugs, zur Berechnung von Steuersignalen für eine Fahrwerkregelung des Fahrzeugs. Die Vorteile dieser Verfahren entsprechen den vorstehend in Bezug auf die erfinderische Vorrichtung genannten Vorteilen.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Ein Weg zum Ausführen der beanspruchten Erfindung ist nachfolgend anhand der Zeichnung im Einzelnen erläutert.
- Figur 1: zeigt ein Fahrzeug mit erfindungsgemäßer Fahrwerkregelung beim Heranfahren an eine Kurve;
- Figur 2: zeigt das Gesamtsystem der erfindungsgemäßen Fahrwerkregelung mit seinen Komponenten; und
- Figur 3: zeigt einen Querschnitt des Fahrzeugs und der Fahrbahn entlang der Fahrzeuglängsachse.

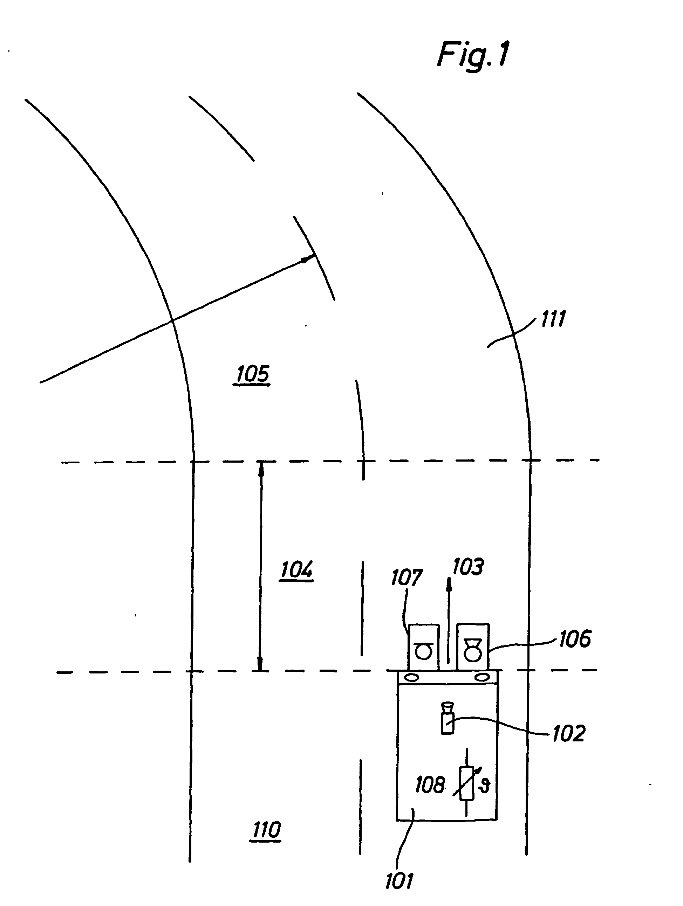

Die Figur 1 zeigt ein Fahrzeug 101 mit der erfindungsgemäßen Fahrwerkregelung, insbesondere mit einer Kamera 102. Das Fahrzeug 101 fährt in Richtung 103 auf der Straße 110 und befindet sich im Abstand 104 von einer Kurve 111 mit dem Radius 105. Die Kamera 102 als Bildaufnahme-Mittel bzw. Signalaufnahme-Mittel wandelt die aufgenommenen Signale in elektrische Umgebungs-Signale um. Ein Signalverarbeitungs-Mittel in dem Fahrzeug 101 ermittelt aus den elektrischen Umgebungs-Signalen den Abstand 104 von der Kurve 111 sowie den Radius 105 der Kurve 111. Es wäre auch möglich, aus den aufgenommenen Bildinformationen die Geschwindigkeit des Fahrzeugs 101 zu ermitteln. Die erfindungsgemäße Fahrwerkregelung ermittelt auf der Grundlage der Fahrzeuggeschwindigkeit, des Abstandes 104 zur Kurve sowie des Radius 105 der Kurve 111 die einzustellenden Fahrwerk-Kenngrößen derart, dass ein sicheres und komfortables Befahren der Kurve gewährleistet ist. In die Berechnung der Fahrwerk-Kenngrößen fließen auch weitere Informationen ein, im dargestellten Beispiel die von einem Sender 106 ausgesandten und von der Umgebung reflektierten und von einem Empfänger 107 empfangenen elektromagnetischen Signale. Als Sender und Empfänger können beispielsweise mikrowellenbasierte Radargeräte oder laserbasierte Systeme eingesetzt werden, die insbesondere im Infrarotbereich arbeiten. Die elektromagnetischen Signale erlauben Rückschlüsse auf sich auf der Fahrbahn befindliche Gegenstände oder vorausfahrende Fahrzeuge. Weiterhin wird bei der Berechnung der Fahrwerk-Kenngrößen die mittels eines Temperatursensors 108 ermittelte Umgebungstemperatur berücksichtigt.

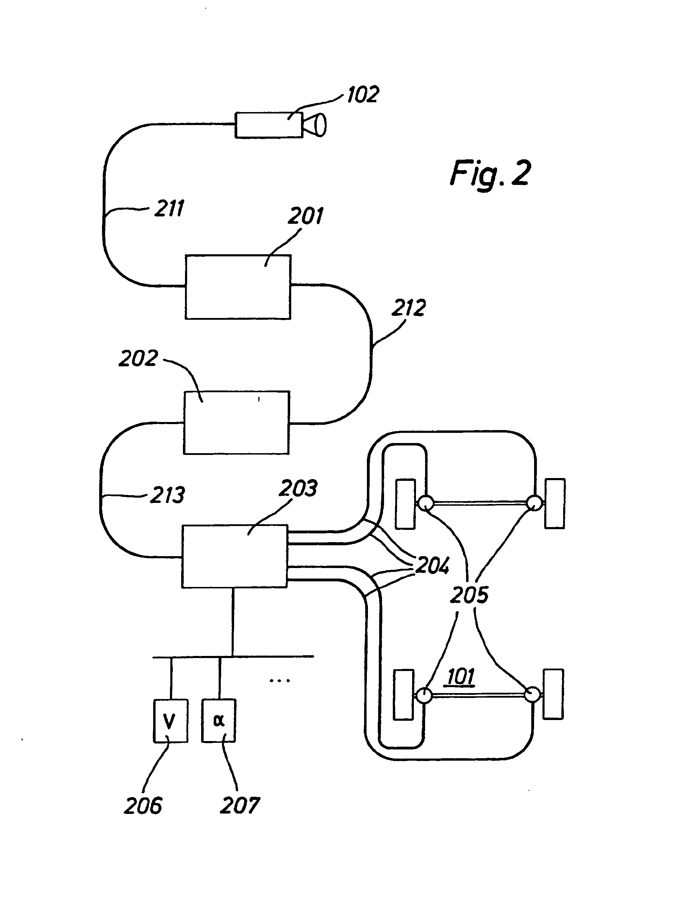

Die Figur 2 stellt das Gesamtsystem der erfindungsgemäßen Fahrwerkregelung dar. Die Kamera 102 nimmt die Signale der Umgebung des Fahrzeugs auf und wandelt diese Signale in elektrische Umgebungs-Signale 211. Die Signalverarbeitungs-Mittel 201 ermitteln die fahrwegrelevanten Informationen 212 aus diesen elektrischen Umgebungs-Signalen 211. Rechen-Mittel 202 berechnen die Steuersignale 213 für die Fahrwerkregelung 203 unter Verwendung der fahrwegrelevanten Informationen 212. Die Fahrwerkregelung 203 setzt die Steuersignale 213 in entsprechende hydraulische, pneumatische oder elektrische Steuersignale um, die über entsprechende Leitungen 204 an die aktiven Fahrwerkelemente 205 weitergeleitet werden. Die Umgebungs-Signale 211 sind vorzugsweise elektrischer Natur, können jedoch ebenso wie die fahrwegrelevanten Informationen 212 und die Steuersignale 213 anderer Natur sein, bspw. auf optischem Wege über eine Glasfaser übertragen werden. Bei dem dargestellten Ausführungsbeispiel berücksichtigt die Fahrwerkregelung 203 zudem noch Signale des Geschwindigkeitssensors 206 sowie Signale eines Messwertaufnehmers 207 zur Bestimmung des Lenkrad-Einschlags. Diese beiden transienten fahrzeugspezifischen Parameter sind nur beispielhaft aufgeführt und können im Bedarfsfall durch weitere transiente fahrzeugspezifische Daten, wie z.B. die Drehzahl, die Schaltstufe, die Masse oder die Massenverteilung, ergänzt werden. Die transienten fahrzeugspezifischen Parameter 206, 207 können alternativ oder zusätzlich auch den Rechen-Mitteln 202 für eine Signalverarbeitung zur Verfügung gestellt werden bzw. von den Rechen-Mitteln 202 berücksichtigt werden.

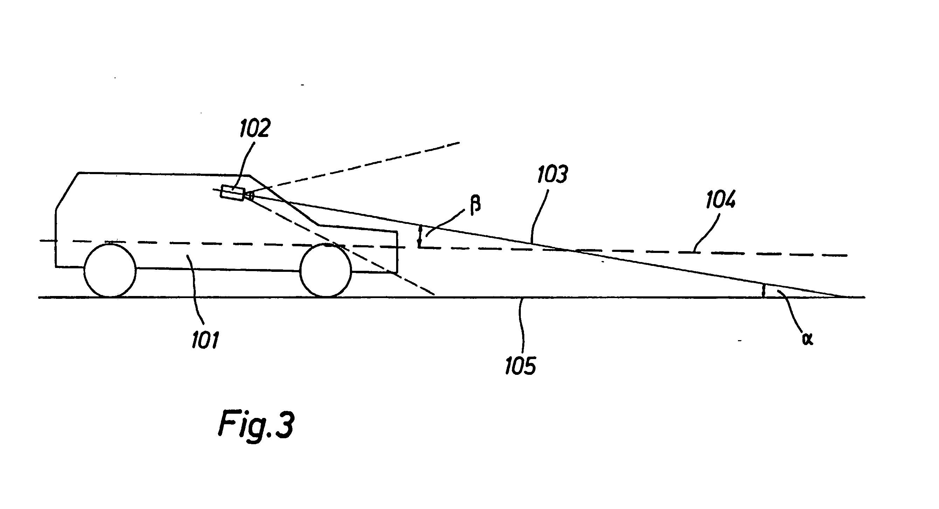

Die Figur 3 zeigt einen Querschnitt entlang der Fahrzeuglängsachse. Die Kamera 102 ist in diesem Beispiel verhältnismäßig hoch im Fahrzeuginnern hinter der Windschutzscheibe derart angebracht, dass sie einen guten "Blick" auf die Verkehrsszene in Fahrtrichtung des Fahrzeuges hat und sich darüberhinaus noch im Wirkungsbereich des Scheibenwischers des Fahrzeugs 101 befindet. Die Kamera 102 ist fest mit dem Fahrzeug 101 verbunden. Die optische Achse 103 der Kamera 102 schließt mit einer horizontalen Achse 104 des Fahrzeugs 101 den Winkel β ein. Die Bildverarbeitungs-Mittel gemäß der vorliegenden Erfindung ermitteln den von der optischen Achse 103 der Kamera 102 und der Fahrbahnebene 105 eingeschlossenen Winkel α. Da der Winkel β unveränderlich und dem Regelsystem bekannt ist, kann aus der Differenz des bekannten Winkel β und dem ermittelten Winkel α der Nickwinkel des Fahrzeugs 101 ermittelt werden.

Als Kamera 102 kann beispielsweise ein CMOS-Bildsensor oder eine CCD-Kamera verwendet werden. Bei einem CMOS-Bildsensor ist es vorteilhaft, eine Kennlinie vorzusehen, die mit zunehmender Lichtintensität eine abnehmende Steigung aufweist. Besonders zweckmäßig ist es, eine logarithmische Kennlinie vorzusehen.

Des Weiteren ist es möglich, mehrere, gegebenenfalls synchronisierte Kameras mit insbesondere unterschiedlichen Einstellungen, z.B. verschiedenen Brennweiten, zu verwenden.

## Patentansprüche

1. Vorrichtung zur Regelung eines Fahrwerks eines Fahrzeugs (101) mit Mitteln zur Einstellung von Fahrwerk-Kenngrößen, wie z.B. Federweg oder Federkonstante, entsprechend berechneter Steuersignale (213), mit
- Signalaufnahme-Mittel (102, 107, 108) zur Aufnahme von Signalen der Umgebung des Fahrzeugs (101) und zur Wandlung der Signale in Umgebungs-Signale (211), wobei es sich bei den Signalaufnahme-Mitteln um Bildaufnahme-Mittel (102) zur Aufnahme von Bildern der Umgebung des Fahrzeugs (101) handelt,
- Signalverarbeitungs-Mittel (201) zur Ermittlung von fahrwegrelevanten Informationen (212) aus den Umgebungs-Signalen (211) unter Verwendung von Verfahren und Algorithmen der digitalen Bildverarbeitung, und
- Rechen-Mittel (202) zur Berechnung der Steuersignale (213) für die Fahrwerkregelung (203) unter Verwendung der fahrwegrelevanten Informationen (212).

2. Vorrichtung nach Anspruch 1, **gekennzeichnet durch** Mittel (206, 207) zur Erfassung transienter fahrzeugspezifischer Daten, wie z.B. momentane Geschwindigkeit (v) oder Masseverteilung, wobei die Rechen-Mittel (202) die transienten fahrzeugspezifischen Daten bei der Berechnung der Steuersignale berücksichtigt.

3. Vorrichtung nach Anspruch 1, **dadurch gekennzeichnet, dass** die Bildaufnahme-Mittel (102) in einer hohen Position im Inneren des Fahrzeugs (101), vorzugsweise zwischen Rückspiegel und Windschutzscheibe, positioniert sind.

4. Vorrichtung nach Anspruch 1 oder 3, **dadurch gekennzeichnet, dass** die Bildaufnahme-Mittel (102) eine Kamera, vorzugsweise ein CMOS-Bildsensor oder eine CCD-Kamera, aufweisen.

5. Vorrichtung nach einem der Ansprüche 1 bis 4, **dadurch gekennzeichnet, dass** die Bildverarbeitungs-Mittel den Nickwinkel ( - ) des Fahrzeugs (101) ermitteln.

6. Fahrzeug, insbesondere ein Personenkraftwagen, **dadurch gekennzeichnet, dass** das Fahrzeug eine Vorrichtung zur Regelung eines Fahrwerks des Fahrzeugs nach einem der vorstehenden Ansprüche aufweist.

7. Verfahren zur Regelung eines Fahrwerks eines Fahrzeugs (101) durch Einstellen von Fahrwerk-Kenngrößen, wie z.B. Federweg oder Federkonstante, entsprechend'berechneter Steuersignale (213), **gekennzeichnet durch** die Schritte:
- Aufnehmen von Signalen der Umgebung des Fahrzeugs (101) mit Bildaufnahme-Mitteln (102) zur Aufnahme von Bildern der Umgebung des Fahrzeugs (101),
- Wandeln der Signale in Umgebungs-Signale (211),
- Ermitteln von fahrwegrelevanten Informationen (212) aus den Umgebungs-Signalen (211) unter Verwendung von Verfahren und Algorithmen der digitalen Bildverarbeitung und
- Berechnen der Steuersignale (213) für die Fahrwerkregelung (203) unter Verwendung der fahrwegrelevanten Informationen (212).

8. Verwendung von Bildern der Umgebung eines Fahrzeugs (101) zur Berechnung von Steuersignalen (213) für eine Fahrwerkregelung (203) des Fahrzeugs (101).

## Claims

1. Method for controlling a chassis of a vehicle (101) having means for setting chassis characteristic variables such as, for example, spring travel or spring constant, corresponding to calculated control signals (213), having
- signal pick-up means (102, 107, 108) for picking up signals from the surroundings of the vehicle (101) and for converting the signals into surroundings signals (211), the signal pick-up means being image recording means (102) for recording images of the surroundings of the vehicle (101),
- signal processing means (201) for determining travel route-related information (212) from the surroundings signals (211) using methods and algorithms from digital image processing, and
- computing means (202) for calculating the control signals (213) for the chassis control (203) using the route-related information (212).

2. Device according to Claim 1, **characterized by** means (206, 207) for sensing transient, vehicle-specific data such as, for example, instantaneous velocity (v) or mass distribution, the computing means (202) taking into account the transient, vehicle-specific data in the calculation of the control signals.

3. Device according to Claim 1, **characterized in that** the image-recording means (102) are positioned in a high position in the interior of the vehicle (101), preferably between the rear view mirror and the windscreen.

4. Device according to Claim 1 or 3, **characterized in that** the image-recording means (102) have a camera, preferably a CMOS image sensor or a CCD camera.

5. Device according to one of Claims 1 to 4,
**characterized in that** the image-processing means determine the pitch angle (-) of the vehicle (101).

6. Vehicle, in particular a passenger car, **characterized in that** the vehicle has a device for controlling a chassis of the vehicle according to one of the preceding claims.

7. Method for controlling a chassis of a vehicle (101) by setting chassis characteristic variables such as, for example, spring travel or spring constant, corresponding to calculated control signals (213), **characterized by** the steps:
- picking up of signals relating to the surroundings of the vehicle (101) with image recording means. (102) for recording images of the surroundings of the vehicle (101),
- conversion of the signals into surroundings signals (211),
- determination of route-related information (212) from the surroundings signals (211) using methods and algorithms from digital signal processing, and
- calculation of the control signals (213) for the chassis control (203) using the route-related information (212).

8. Use of images of the surroundings of a vehicle (101) for calculating control signals (213) for a chassis control (203) of the vehicle (101).

## Revendications

1. Dispositif de régulation du châssis d'un véhicule (101) avec des moyens de réglage de paramètres du châssis, par exemple la course de ressort ou la constante de ressort, suivant des signaux de commande calculés (213), comprenant :
- des moyens de réception du signal (102, 107, 108) pour réceptionner des signaux de l'environnement du véhicule (101) et pour les convertir en signaux d'environnement (211), les moyens de réception des signaux étant des moyens de réception d'image (102) pour réceptionner des images de l'environnement du véhicule (101),
- des moyens de traitement de signal (201) pour calculer des informations pertinentes pour la chaussée (212) à partir des signaux d'environnement (211) en utilisant le procédé et les algorithmes du traitement d'image numérique, et
- des moyens de calcul (202) pour calculer les signaux de commande (213) pour la régulation du châssis (203) en utilisant les informations pertinentes pour la chaussée (212).

2. Dispositif selon la revendication 1,
**caractérisé par**
des moyens (206, 207) de détection de données transitoires spécifiques au véhicule, comme la vitesse momentanée (v) ou la répartition de la masse, les moyens de calcul (202) tenant compte des données transitoires spécifiques au véhicule lors du calcul des signaux de commande.

3. Dispositif selon la revendication 1,
**caractérisé en ce que**
les moyens de réception d'image (102) sont positionnés dans une position élevée à l'intérieur du véhicule (101), de préférence entre le rétroviseur et le pare-brise.

4. Dispositif selon la revendication 1 ou 3,
**caractérisé en ce que**
les moyens de réception d'image (102) présentent un appareil photo, de préférence un capteur d'image CMOS ou un appareil photo CCD.

5. Dispositif selon l'une quelconque des revendications 1 à 4,
**caractérisé en ce que**
les moyens de traitement d'image calculent l'angle de tangage ( - ) du véhicule (101).

6. Véhicule, notamment voiture particulière,
**caractérisé en ce qu'**
il présente un dispositif de régulation d'un châssis du véhicule suivant l'une des revendications précédentes.

7. Procédé de régulation du châssis d'un véhicule (101) en réglant des paramètres du châssis, par exemple la course de ressort ou la constante de ressort, suivant des signaux de commande calculés (213),
**caractérisé par**
les étapes consistant à :
- réceptionner des signaux de l'environnement du véhicule (101) avec des moyens de réception d'image (102) pour réceptionner des images de l'environnement du véhicule (101),
- convertir les signaux en signaux d'environnement (211)
- calculer des informations pertinentes pour la chaussée (212) à partir des signaux d'environnement (211) en utilisant des procédés et des algorithmes du traitement d'image numérique, et
- calculer les signaux de commande (213) pour la régulation du châssis (203) en utilisant les informations pertinentes pour la chaussée (212).

8. Utilisation d'images de l'environnement d'un véhicule (101) pour calculer des signaux de commande (213) pour une régulation de châssis (203) du véhicule (101).
